Europäisches Patentamt

European Patent Office

Office européen des brevets

(11) Veröffentlichungsnummer: **0 259 648**

**A1**

# EUROPÄISCHE PATENTANMELDUNG

(21) Anmeldenummer: 87111856.8

(22) Anmeldetag: 17.08.87

(51) Int. Cl.4: **A46B 13/02** , A46B 7/08

(30) Priorität: 08.09.86 DE 3630499

(43) Veröffentlichungstag der Anmeldung:
16.03.88 Patentblatt 88/11

(84) Benannte Vertragsstaaten:
AT CH GB LI

(71) Anmelder: **Braun Aktiengesellschaft**
**Rüsselsheimer Strasse 22**
**D-6000 Frankfurt/Main(DE)**

(72) Erfinder: **Kirchner, Horst**
**Neugasse 17**
**D-6236 Eschborn(DE)**

(54) **Bürstenelement für eine elektrisch betriebene Zahnbürste.**

(57) Das Bürstenelement besteht aus einem Bürstenstiel (12), einem Bürstenkopf (11) zur Halterung von wenigstens einer Bürste (20), die um eine Drehachse (B) rotiert, welche im wesentlichen etwa rechtwinklig zur Achse des Bürstenstiels (12) verläuft. Die Bürste (20) ist seitlich zur Bürstenstielachse am Bürstenstiel (12) am Bürstenkopf (11) angeordnet und exzentrisch auf einem rotierenden Antriebsmittel befestigt, so daß die Bürste (20) beim Gebrauch eine rotatorische Bewegung überlagert von einer translatorischen Bewegung ausführt.

FIG.1b

EP 0 259 648 A1

## Bürstenelement für eine elektrisch betriebene Zahnbürste

Die Erfindung geht aus von einem Bürstenelement für eine Zahnbürste nach der Gattung des Hauptanspruchs. Ein derartiges Bürstenelement ist bereits aus der EP-A2 0 173 150 bekannt. In dieser Schrift ist eine elektrische Zahnbürste beschrieben, die aus einem Griff besteht, in dessen Inneren ein Antrieb untergebracht ist, an dem ein Bürstenstiel lösbar befestigt ist. Eine an einem Bürstenkopf fixierte Bürste wird durch den Antrieb in eine Rotationsbewegung versetzt, wobei die Rotationsachse ungefähr radial zur Achse des Bürstenstiels ausgerichtet ist. Darüber hinaus ist diese Zahnbürste durch einen schwenk- oder kippbar gelagerten Bürstenkopf gekennzeichnet.

Weiterhin sind elektrische Zahnbürsten bekannt, bei denen das Bürstenelement in eine Translationsbewegung versetzt wird, so daß das Bürstenelement in etwa die Bewegung einer handbetätigten Zahnbürste ausführt.

Der Erfindung liegt die Aufgabe zugrunde, ein Bürstenelement für eine elektrisch betriebene Zahnbürste zu schaffen, mit welchem die Vorteile der beiden oben geschilderten Zahnputzverfahren gemäß dem Stand der Technik vereint werden. Darüber hinaus soll das Bürstenelement eine dem Putzvorgang angepaßte Formgebung aufweisen und von der Konstruktion her den Gegebenheiten moderner Massenfertigung entsprechen. Diese Aufgabe wird durch ein Bürstenelement mit den Merkmalen des Hauptanspruchs gelöst.

Durch die exzentrische Befestigung der Bürste auf einem rotierenden Antriebsmittel wird in vorteilhafter Weise eine der Rotationsbewegung der Bürste überlagerte Translations-oder Hubbewegung erzielt und somit der Reinigungseffekt gegenüber herkömmlichen Bürsten erhöht. Insbesondere wird durch die unterschiedliche Bahngeschwindigkeit einzelner Reinigungselemente mit gleichem radialem Abstand von der Bürstenkopfmittelachse eine erhöhte Reinigungswirkung an den gekrümmtn Zahnoberflächen, in den Zahnfleischtaschen und -furchen sowie den Zahnzwischenräumen erreicht. Auch die effektive Putzfläche jeder Bürste wird aufgrund der exzentrischen Bewegung vergrößert. Die seitliche Anordnung der Bürste zur Bürstenstielachse im Bürstenkopfbereich erlaubt einen sehr flachen Aufbau des Bürstenelements, wodurch die Handhabbarkeit während des Putzvorganges erheblich verbessert wird. Gleichzeitig gewährleistet eine derartige Anordnung der Bürste einen einfachen, konstruktiven Aufbau des Bürstenantriebs. Der Einsatz von mehreren Bürsten auf dem Bürstenelement läßt eine Vergrößerung der Reinigungsflächen unter Beibehaltung eines kompakten Aufbaus zu. Insbesondere zwei Ausführungsformen, -nämlich die Anordnung von mehreren, einander gegenüberliegenden Bürsten beidseitig der Bürstenstielachse und die einseitige, hintereinanderliegende Anordnung mehrerer Bürsten auf einer Seite der Bürstenstielachse haben sich als besonders geeignet für den praktischen Einsatz erwiesen. Während im Fall der beidseitigen Anordnung Unwuchten aufgrund der exzentrischen Bewegung weitgehend vermieden werden, wird für die einseitige Anordnung ein zusätzlicher Reinigungseffekt durch die unwuchtbedingte Zusatzbewegung des Bürstenkopfes erzielt. Aber auch andere Anordnungen, zum Bei spiel - schräg einander gegenüberliegende Bürsten oder ähnliches, können für bestimmte Einsatzfälle von Vorteil sein. Die Ausbildung des Antriebs der Bürsten als Schneckentrieb, der mit den Bürsten zugeordneten Schneckenrädern kämmt, erlaubt einen problemlosen Aufbau des Bürstenelements und ist für eine preisgünstige Großserienfertigung geeignet. Darüber hinaus läßt sich eine derartige Zahnbürste ohne den Einsatz eines Getriebes im Handgriff der Zahnbürste betreiben, welches für elektrisch betriebene Zahnbürsten herkömmlicher Art ständig vorgesehen ist. Die Exzentrizität, das heißt der Abstand zwischen der Drehachse und der Mittelachse der Bürste ist vorteilhafterweise auf einen Bereich zwischen etwa 3 % und 30 % des Bürstendurchmessers festgelegt, wodurch eine dem Reinigungsvorgang angepaßte Hubbewegung erzielbar ist. Bezüglich der Anordnung der Drehachsen der Bürsten zueinander hat sich die parallele Anordnung bzw. eine winklige Anordnung mit Winkeln im Bereich zwischen ca. 0° und ca. 30° bewährt. Bei der Verwendung von mehreren Bürsten kann die Phase der exzentrischen Bewegungen der Bürsten im Prinzip jede beliebige Phasenlage aufweisen. Besonders günstig erweist sich jedoch die gegenphasige bzw. gleichphasige Bewegung der Bürsten, wobei insbesondere die gegenphasige Bewegung eine Kompensation möglicher Unwuchten zuläßt.

Weitere Vorteile der Erfindung ergeben sich aus der nachfolgenden Beschreibung zweier Ausführungsbeispiele in Verbindung mit der Zeichnung. Es zeigen:

Fig. 1    eine Gesamtdarstellung in Seitenansicht und Draufsicht eines ersten Ausführungsbeispiels eines Bürstenelements,

Fig. 1a, b, c    Teilansichten in verschiedenen Schnitten

Fig. 2    eine Gesamtdarstellung in Seitenansicht und Draufsicht eines zweiten Ausführungsbeispiels eines Bürstenelements

Fig. 2a, b    Teilansichten in verschiedenen Schnittdarstellungen.

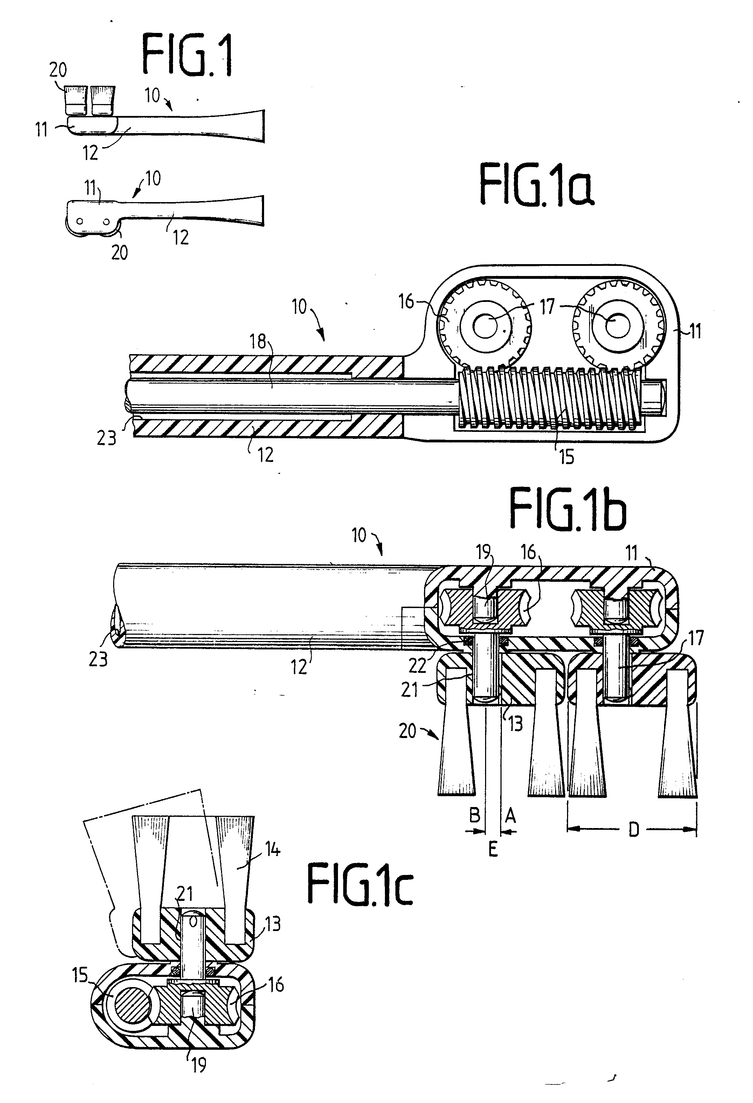

Bezugnehmend auf die Figuren 1, 1a, b, c ist eine erste Ausführungsform eines Bürstenelements dargestellt, wobei mit der Bezugsziffer 10 eine Aufsteckbürste an sich bezeichnet ist. Die Aufsteckbürste 10 gliedert sich in einen Bürstenstiel 12 und einen Bürstenkopf 11. Am Bürstenkopf 11 sind zwei Bürsten 20 befestigt, die auf einer Seite der Achse des Bürstenstiels 12 in Achsrichtung des Bürstenstiels 12 gesehen hintereinanderliegend angeordnet sind. Die Bürsten 20 sind aus einem Bürstenträger 13 sowie Reinigungselementen 14 aufgebaut. Der Bürstenträger 13 weist eine zu seiner Mittelachse A exzentrisch angeordnete Bohrung 21 auf. Die Exzentrizität, das heißt der Abstand zwischen der Mittelachse A des Bürstenträgers 13 und einer durch die Bohrung 21 gelegten Mittelachse B beträgt im vorliegenden Ausführungsbeispiel ca. 10 % des Durchmessers D des Bürstenträgers 13. In der Praxis haben sich Exzentrizitäten E im Bereich zwischen 0,03 $D \leq E \leq 0,3$ D mit D $\triangleq$ Durchmesser des Bürstenträgers 13 als vorteilhaft erwiesen. In die Bohrung 21 greift ein Schneckenradzapfen 17 eines Schneckenrades 16 ein, das auf einem an einem Gehäuse des Bürstenkopfes 11 angeformten Zapfen 19 gelagert ist. Das Schneckenrad 16 kämmt mit einem Schneckentrieb 15, der auf einer Schneckenwelle 18 fixiert ist, welche sich durch eine Längsbohrung 23 durch den Bürstenstiel 12 zu einem dem Bürstenkopf 11 abgewandten Ende der Aufsteckbürste 10 erstreckt. Zur Inbetriebnahme wird die Aufsteckbürste 10 auf den Handgriff einer in der Zeichnung nicht dargestellten, elektrisch betriebenen Zahnbürste mit einem Antriebselement aufgesteckt, derart, daß eine Antriebswelle des Antriebselements mit der Schneckenwelle 18 kuppelbar und der Bürstenstiel 12 mit dem Handgriff der Zahn bürste verrastbar ist. Derartige Rast-bzw. Kupplungsmittel sind allgemein bekannt, so daß hierauf nicht näher einzugehen ist. Es ist lediglich dafür Sorge zu tragen, daß die Kupplungs-bzw. Rastmittel eine verdrehsichere Verbindung der jeweiligen Teile gewährleisten (z.B. Innen-und Außensechskant oder ähnliches). Jedenfalls wird nach Verbinden der Aufsteckbürste 10 mit dem Handgriff der elektrisch betriebenen Zahnbürste und nach Ingangsetzen des Antriebselements die Schneckenwelle 18 relativ zum Bürstenstiel 10 in Rotation versetzt und treibt ihrerseits über den Schneckentrieb das Schneckenrad 16 einer jeden Bürste 20 an. Im vorliegenden Ausführungsbeispiel werden die beiden Bürsten in eine Rotationsbewegung mit gleichem Drehsinn versetzt. Durch die exzentrische Anordnung des Bürstenträgers 13 auf dem Schneckenradzapfen 17 ist der Rotationsbewegung eine Hubbewegung überlagert. Zum Schutz der Antriebselemente in der Aufsteckbürste ist der Bürstenkopf 11 im Austrittsbereich der Schneckenzapfen 17 mit Dichtelementen 22 versehen, welche ein Eindringen von Schmutz und Feuchtigkeit in das Innere der Aufsteckbürste 10 verhindern.

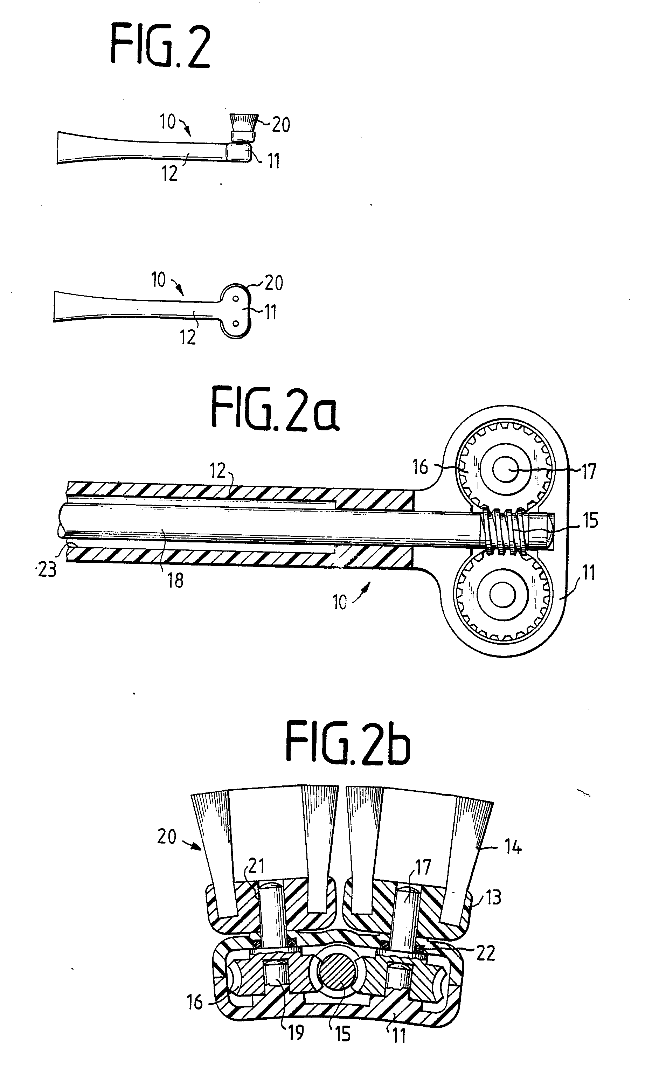

In Fig. 2, 2a, b ist ein weiteres Ausführungsbeispiel eines Bürstenelements dargestellt, bei dem zu Fig. 1 gleiche Teile mit gleichen Bezugsziffern bezeichnet sind. Diese Anordnung unterscheidet sich vom ersten Ausführungsbeispiel im wesentlichen dadurch, daß die beiden Bürsten 20 einander gegenüberliegend, jeweils auf einer Seite der Bürstenstielachse angeordnet sind und erlaubt somit einen symmetrischen Aufbau des Bürstenkopfes. Der Antrieb und die Verbindung der Aufsteckbürste 10 zum Handgriff der elektrischen Zahnbürste sind im wesentlichen identisch zum ersten Ausführungsbeispiel. Dadurch, daß die beiden Schneckenräder 16 der Bürsten 20 beidseitig des Schneckentriebs 15 angeordnet sind, werden sie in gegensinnige Drehbewegung versetzt, wodurch aufgrund einer Unwuchtkompensation eine relativ stabile Lage während des Putzvorganges auf der Putzfläche gewährleistet wird.

Im Falle des Einsatzes nur einer einzigen Bürste 20 münden beide Ausführungsbeispiele in die gleiche Ausführungsform. Gleichfalls ist der Einsatz von mehr als zwei Bürsten 20 oder eine Kombination der beiden Ausführungsbeispiele mit mehreren Bürsten 20 aufgrund der vorliegenden Beschreibung problemlos durchzuführen und liegt im Rahmen der Erfindung. Neben einer parallelen Ausrichtung der Drehachsen der Bürsten 20, wie sie in Fig. 1b dargestellt ist, ist auch die Möglichkeit gegeben, die Drehachsen der Bürsten 20 winklig zueinander anzuordnen. Dies ist gestrichelt in Fig. 1c sowie in Fig. 2b dargestellt. Der Winkelbereich des Winkels $\alpha$, den die Drehachsen der Bürsten 20 zueinander bilden, liegt vorteilhaft zwischen $0° < \alpha \leq 30°$. Obwohl in der Zeichnung die Drehachsen bezogen auf den Bürstenkopf auseinanderlaufen, erweist sich eine umgekehrte Neigung der Drehachsen, insbesondere beim Einsatz von Bürsten mit kegelig angeordneten Reinigungselementen als vorteilhaft.

In den beschriebenen Ausführungsbeispielen ist im Prinzip jede beliebige Anordnung der exzentrischen Befestigung des Bürstenträgers 13 auf dem Schneckenradzapfen 17 möglich. Als besonders vorteilhaft hat sich jedoch die Anordnung herausgestellt, daß die Bürsten 20 paarweise jeweils gleichphasig oder gegenphasig ihre, bezogen auf die Mittelachse A exzentrische Bahnkurve durchlaufen. Für den praktischen Gebrauch ist eine Austauschbarkeit der Bürsten 20 vorzusehen, die dann durch eine geeignete Schnappvorrichtung auf den Schneckenradzapfen 17 befestigt werden. Im Ausführungsbeispiel wurde der Schneckentrieb derart ausgelegt, daß die Bürste 20 eine Drehzahl im Bereich von 500 U/min bis 2000 U/min ausführt. Bezogen auf eine vorgegebene Drehzahl, Exzentrizität und Durchmesser des Borstenkranzes ergeben sich Bahngeschwindigkeiten einzelner Reinigungselemente der Bürste im Be reich von ca. 0,2 m/s bis 1 m/s. Durch den Einsatz eines weiteren Getriebes kann die Bahngeschwindigkeit - falls erforderlich - noch wesentlich verringert werden. Die Bürstenträger 13 lassen sich mit Reinigungselementen 14 unterschiedlichster Form und Anordnung auf dem Bürstenträger 13 versehen. Die spezielle Beborstung für die jeweilige Ausführungsform des Antriebes und der Anordnung der Bürsten 20 ist im Einzelfall zu ermitteln und liegt im Rahmen des Fachwissens des zuständigen Durchschnittsfachmanns. Insbesondere eine Anordnung der Reinigungselemente auf einem Kreisring mit einem Durchmesser von ca. 6 - 12 mm und einer Kreisringdicke von ca. 2 5 mm hat sich als zweckmäßig erwiesen.

**Ansprüche**

1. Bürstenelement für einen Handgriff einer elektrisch betriebenen Zahnbürste, der ein Antriebselement aufweist, mit einem Bürstenstiel (12), einem Bürstenkopf (11) zur Halterung von wenigstens einer Bürste (20), die um eine Drehachse (B) rotiert, welche winkelig, insbesondere im wesentlichen etwa rechtwinklig zur Achse des Bürstenstiels (12) verläuft, dadurch gekennzeichnet, daß die Bürste (20) seitlich zur Bürstenstielachse am Bürstenstiel (12) am Bürstenkopf (11) angeordnet und exzentrisch auf einem in Rotation versetzbaren Antriebsmittel befestigt ist.

2. Bürstenelement nach Anspruch 1, dadurch gekennzeichnet, daß mehrere, insbesondere zwei Bürsten (20) seitlich der Bürstenstielachse am Bürstenstiel (12) angeordnet sind.

3. Bürstenelement nach Anspruch 2, dadurch gekennzeichnet, daß die Bürsten (20) einander gegenüberliegend, beidseitig der Bürstenstielachse am Bürstenstiel (12) angeordnet sind.

4. Bürstenelement nach Anspruch 2, dadurch gekennzeichnet, daß die Bürsten (20) einseitig der Bürstenstielachse in Achsrichtung gesehen hintereinanderliegend am Bürstenstiel (12) angeordnet sind.

5. Bürstenelement nach einem der vorhergehenden Ansprüche, dadurch gekennzeichnet, daß der Bürstenstiel (12) eine Schneckenwelle (18) aufnimmt, die bürstenkopfseitig mit einem Schneckentrieb (15) verbunden ist.

6. Bürstenelement nach Anspruch 5, dadurch gekennzeichnet, daß der Schneckentrieb (15) mit einem, jeweils einer Bürste (20) zugeordneten Schneckenrad (16) kämmt, welches auf einem, an einem Gehäuse des Bürstenkopfes (11) angeformten Zapfen (19) gelagert ist.

7. Bürstenelement nach Anspruch 6, dadurch gekennzeichnet, daß die Bürste (20) auf einen Schneckenradzapfen (17) des Schneckenrades (16) aufsteckbar ist.

8. Bürstenelement nach einem der Ansprüche 5-7, dadurch gekennzeichnet, daß die Schneckenwelle (18) mit einer Antriebswelle des Antriebselements kuppelbar und der Bürstenstiel (12) mit dem Handgriff der Zahnbürste verrastbar ist.

9. Bürstenelement nach einem der Ansprüche 1-8, dadurch gekennzeichnet, daß der Abstand E zwischen der Drehachse (B) und einer Mittelachse (A) der Bürste (20) (Exzentrizität) insbesondere auf einen Bereich zwischen $0{,}03\ D \le E \le 0{,}3\ D$ mit D $\widehat{=}$ Durchmesser eines Bürstenträgers (13) der Bürste (20) festgelegt ist.

10. Bürstenelement nach einem der Ansprüche 2-9, dadurch gekennzeichnet, daß die Drehachsen der Bürste (20) parallel zueinander verlaufen.

11. Bürstenelement nach einem der Ansprüche 2-9, dadurch gekennzeichnet , daß die Drehachsen der Bürsten (20) winkelig zueinander verlaufen mit Winkeln im Bereich $0° < \alpha \le 30°$.

12. Bürstenelement nach einem der Ansprüche 8-11, dadurch gekennzeichnet, daß die Antriebswelle des Antriebselements ohne Zwischenschaltung eines Getriebes mit dem Antriebselement in Wirkverbindung steht.

13. Bürstenelement nach einem der Ansprüche 2-12, dadurch gekennzeichnet , daß die Bürsten (20) derart auf den Schneckenradzapfen (17) relativ zueinander angeordnet sind, daß sie paarweise jeweils gleichphasig eine exzentrische Bahn durchlaufen.

14 . Bürstenelement nach einem der Ansprüche 2-12, dadurch gekennzeichnet, daß die Bürsten (20) derart auf den Schneckenradzapfen (17) relativ zueinander angeordnet sind, daß sie paarweise jeweils gegenphasig eine exzentrische Bahn durchlaufen.

FIG.1

FIG.1a

FIG.1b

FIG.1c

# FIG.2

# FIG.2a

# FIG.2b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-1 997 352 (VAN FLEET) <br> * Seite 1, rechte Spalte, Zeile 1 - Seite 2, linke Spalte, Zeile 26; Figuren 1-7 * | 1,5,6 | A 46 B 13/02 <br> A 46 B 7/08 |
| Y | | 2-4,7,8 ,10,12 | |
| Y | CH-A- 367 276 (WILD) <br> * Anspruch; Figuren 1-4 * | 2,4 | |
| Y | US-A-2 215 031 (ELMORE) <br> * Seite 1, linke Spalte, Zeile 47 - Seite 2, linke Spalte, Zeile 20; Figuren 1-3 * | 3,8,10, 12 | |
| Y | US-A-2 916 752 (BAKER) <br> * Spalte 2, Zeilen 3-8; Figur 3 * | 7 | |
| A | US-A-4 027 348 (FLOWERS et al.) <br> * Spalte 3, Zeile 37 - Spalte 4, Zeile 52; Anspruch 1; Figuren 1-8 * | 13,14 | |

RECHERCHIERTE SACHGEBIETE (Int. Cl.4)

A 46 B

Der vorliegende Recherchenbericht wurde für alle Patentansprüche erstellt

| Recherchenort | Abschlußdatum der Recherche | Prüfer |
|---|---|---|
| DEN HAAG | 07-12-1987 | ERNST R.T. |